# EUROPEAN PATENT APPLICATION

(11) **EP 3 367 533 A1**
(43) Date of publication of application: **29.08.2018**
(21) Application number: 17158034.3
(22) Date of filing: 27.02.2017
(51) Int. Cl.: H02J 3/14, E03F 5/22, F04D 15/02, G05B 13/02

(54) **METHOD FOR CONTROLLING A PUMP CONNECTED TO A PUMP NETWORK**

(71) Applicant: Xylem IP Management S.à.r.l., 1259 Senningerberg (LU)
(72) Inventor: BÄCKE, Jan, 179 96 SVARTSJÖ (SE); ZHONG, Zhiyong, 129 52 HÄGERSTEN (SE)
(74) Representative: Brann AB

(57) **Abstract**

In a fist aspect the invention relates to a method for controlling a pump (2) in connection with first activation of the individual pump () following a connection of the individual pump () to a power supply, said pump (2) being configured to be connected to a Pump Network (1) comprising a plurality of pumps. The method is characterized by the steps of when connecting the individual pump (2) to the power supply, causing the individual pump (2) to remain deactivated, determining a value of at least one Operational parameter (OP) of the individual pump (2), determining a Reference input value (RIV) based on the determined value of said at least one Operational parameter (OP), utilizing the determined Reference input value (RIV) in a Random pause time function (RF) and obtaining a random Activation pause time (APT) as an output from said Random pause time function (RF), said output of the Random pause time function (RF) being within a predetermined range delimited by a minimum pause time and a maximum pause time, and permitting activation of the individual pump (2) after said Activation pause time (APT) has elapsed. In a second aspect the invention also relates to a pump (2) and a pump network (1) comprising a plurality of such pumps (2).

## Description

### Technical field of the Invention

The present invention relates generally to the field of pumps configured for pumping wastewater, and to the field of methods for controlling first activation of such pumps following a connection of the pump to a power supply. Further, the present invention relates specifically to the field of pump networks comprising a plurality of such pumps.

### Background of the Invention

A pump network, such as a Pressure Sewage System, is typically arranged to serve many households in a housing area. A typical housing area comprises for instance 50-100 households, and usually the pump network comprises one pump/pump station per household in order to transport the produced wastewater to a sewage treatment plant. Each pump station is quite small (a few hundred liters) and the pumps are arranged to empty the content of the specific pump station into a common main sewer pipe leading towards a bigger pump station and/or the sewage treatment plant. It is important that not all pumps of the pump network are activated or active at the same time, since the common main sewer pipe is usually just dimensioned to be able to receive wastewater from about one third of the pump stations/households concurrently. During normal operation of the pumps/pump stations of the pump network this is usually not a problem due to natural distribution among the pump stations, and thereto prior art comprises patents describing how to limit the number of active pumps during normal operation of the pump network. It shall be pointed out that if the common main sewer pipe should have been dimensioned to be able to receive wastewater from all pump stations concurrently, the wastewater in the common main sewer pipe may become stagnant most of the time leading to increased risk of generation of hydrogen sulphide in the common main sewer pipe.

Usually all households connected to a specific pump network are also connected to the same power supply network, and the pumps comprises electrical motors. Thus, when there is an interruption of the power supply in the local power supply network due to whatever reason, all pumps of the pump network are stopped/de-energized. However, the pump stations of the households may still be filled despite the lack of power supply, for instance due to toilets being flushed, and after a few hours all individual pump stations are full or have at least reached their respective pump start level. Upon return of the power all pumps are re-energized and started at the same time, leading to a huge power drop in the local power supply network and also an overload in the common main sewer pipe. A huge power drop may cause a new power failure, and an overload in the common main sewer pipe may press wastewater backwards into a pump station that is not activated.

There have been attempts to solve this problem that originates from the re-start of several pumps in a pump network following a power failure, using a Random pause time function. The theoretical purpose of using a Random pause time function is that each individual pump starts after a random Activation pause time and theoretically all pumps ought not to start at the same time. However, in reality all pumps of a common supplier comprise the same random number generator. The random number generator use a clock signal as a Reference input value to the Random pause time function, and since all pumps are re-energized at the same time the Reference input value (clock signal) is the same for all pumps and thereby all pumps will obtain the same "random" Activation pause time.

### Object of the Invention

The present invention aims at obviating the aforementioned disadvantages and failings of previously known methods for controlling a pump in connection with first activation of the individual pump following a connection of the individual pump to a power supply, and at providing an improved method. A primary object of the present invention is to provide an improved method of the initially defined type providing a true random Activation pause time for each pump in a pump network. It is another object of the present invention to provide an improved method, which counteract a huge power drop in the power supply network following an interruption in the power supply. It is another object of the present invention to provide a method, which counteract overload in the main sewer pipe following an interruption in the power supply.

### Summary of the Invention

According to the invention at least the primary object is attained by means of the initially defined method, pump and pressure sewage system having the features defined in the independent claims. Preferred embodiments of the present invention are further defined in the dependent claims.

According to a first aspect of the present invention, there is provided a method of the initially defined type, which is characterized by the steps of when connecting the individual pump to the power supply, causing the individual pump to remain deactivated, determining a value of at least one Operational parameter (OP) of the individual pump, determining a Reference input value (RIV) based on the determined value of said at least one Operational parameter (OP), utilizing the determined Reference input value (RIV) in a Random pause time function (RF) and obtaining a random Activation pause time (APT) as an output from said Random pause time function (RF), said output of the Random pause time function (RF) being within a predetermined range delimited by a minimum pause time and a maximum pause time, and permitting activation of the individual pump after said Activation pause time (APT) has elapsed.

According to a second aspect of the present invention, there is provided a pump that comprises means adapted to execute the steps of the above method. According to a third aspect of the present invention, there is provided a pressure sewage system that comprises a plurality of such pumps.

Thus, the present invention is based on the insight of the importance to use a true random Reference input value in order to achieve distribution over time of the first activation of the individual pumps following a connection of the individual pumps to a power supply.

In a preferred embodiment of the present invention, the method further comprises the step of activating the individual pump when both said Activation pause time (APT) has elapsed and a Pump start sensor has been triggered, and/or comprises the step of activating the individual pump when both said Activation pause time (APT) has elapsed and a predetermined Pump start time interval (PSI) has elapsed. This means that the pump is still dependent on the normal pump start instructions, in combination with the random Activation pause time, following a power interruption in order to prevent uncalled/unnecessary activation of the pump.

According to a preferred embodiment, the output of the Random pause time function (RF) has uniform distribution between said minimum pause time and said maximum pause time. This result in that uniform distribution over time of the re-activation of the pumps in the pressure sewage system is obtained.

According to a preferred embodiment, said Reference input value (RIV) is based on at least one digit of the determined value of said at least one Operational parameter (OP). Preferably, said Reference input value (RIV) is based on at least one decimal digit of the determined value of said at least one Operational parameter (OP). Since all pumps do not experience exactly the same environment, the value of an analog parameter that can be measured will be different for all or at least most of the pumps.

According to a preferred embodiment, the value of said at least one Operational parameter (OP) is constituted by a supply voltage level and/or a temperature level of the individual pump during the determination of the value of said at least one Operational parameter (OP) of the individual pump. These Operational parameters are usually already measured, or at least easy to measure/determine.

According to a preferred embodiment, said Reference input value (RIV) is based on a determined value of a first Operational parameter (OP) and on a determined value of a second Operational parameter (OP). By using at least two Operational parameters when determining the Reference input value of the individual pump, the distribution of the Reference input value among a plurality of pumps will be more uniform.

According to a preferred embodiment, the individual pump is operatively connected to a separate control unit. Thereby, no co-ordination or inter-connection of the operation of the different pumps in the pressure sewage system is needed.

Further advantages with and features of the invention will be apparent from the other dependent claims as well as from the following detailed description of preferred embodiments.

### Brief description of the drawings

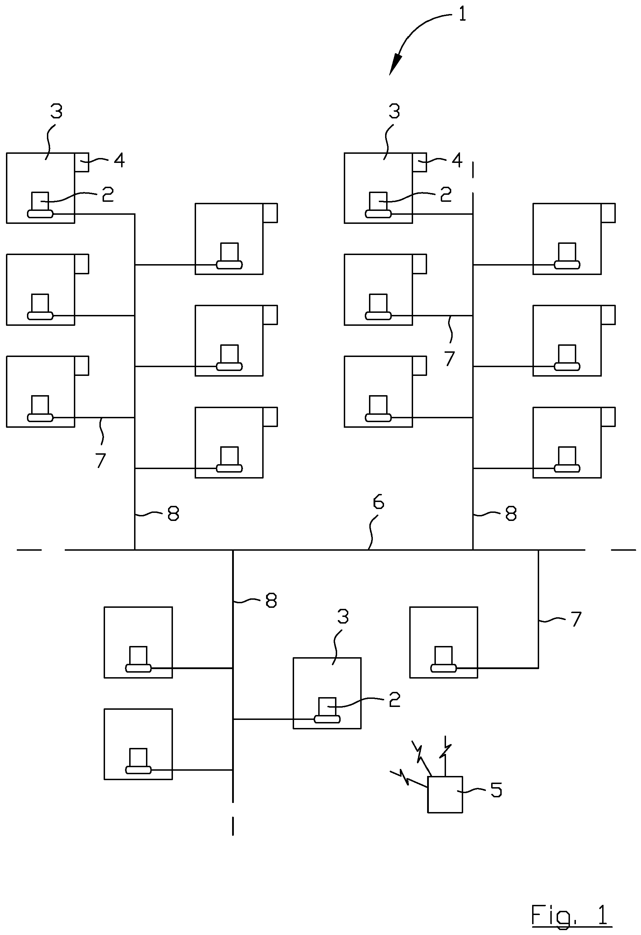

A more complete understanding of the abovementioned and other features and advantages of the present invention will be apparent from the following detailed description of preferred embodiments in conjunction with the appended drawing, wherein Fig. 1 is a schematic illustration of a Pump Network comprising a plurality of pumps.

### Detailed description of preferred embodiments of the invention

The present invention relates specifically to a Pump Network, generally designated 1, configured for transporting wastewater from different locations towards a sewage treatment plant (not disclosed). In the disclosed embodiment the pump network 1 is constituted by a socalled Pressure Sewage System (PSS). A Pressure Sewage System is for instance used when the terrain/landscape prevents the wastewater to flow by means of gravity towards the sewage treatment plant, instead the wastewater is pushed towards the sewage treatment plant. It is conceivable that the wastewater from the Pressure Sewage System is pushed to a large pump station and from the large pump station the wastewater flow by means of gravity towards the sewage treatment plant.

The pump network 1 comprises a plurality of pumps 2 configured for pumping wastewater. More precisely, the pump network 1 comprises a plurality of pump stations 3, each comprising at least one pump 2 configured to be connected to the pump network 1. Said pump 2 is preferably a submersible pump, i.e. the pump 2 is designed and configured to be able to operate in a submerged configuration/position, i.e. during operation be located entirely under the liquid surface. However, it shall be realized that the pump 2 during operation must not be entirely located under the liquid surface but may continuously or occasionally be partly located above the liquid surface. Each pump station 3 is typically arranged to collect all the wastewater originating from a single household, and a typical pump network 1 comprises for instance 10-100 pump stations 3, i.e. pumps 2, however pump networks 1 comprising more or less pump stations 3 are conceivable. Each pump station 3 is preferably configured to hold a maximum liquid volume in the range 100-600 liters, however it shall be realized that also pump stations 3 having a larger maximum liquid volume are conceivable. It shall also be realized that a specific pump network 1 may comprise pump stations 3 of different size, or of the same size.

According to a preferred embodiment the individual pump 2 is operatively connected to a separate control unit 4, i.e. each pump 2 or pump station 3 comprises an individual control unit 4. The control unit 4 may be constituted by an Intelligent Drive or Variable Frequency Drive (VFD), and is configured to control the operational speed of the individual pump 2. According to an alternative embodiment several individual pumps 2 are operatively connected to a common control unit 5. The control unit 5 may be constituted by an Intelligent Drive or Variable Frequency Drive (VFD), and is configured to control the operational speed of the pumps independently. The common control unit 5 may be constituted by a cloud service/computing, wherein each pump station 3 is connected to the Internet. Also pumps 2 comprising an individual control unit 4 may be connected to the Internet. Hereinbelow, only the term control unit 4 will be used but it is realized that all types/locations of control unit arrangements are included.

Each individual pump 2 is fluidly connected to a common main sewer pipe 6 of the pump network 1. According to one embodiment the individual pump 2 is directly connected to the common main sewer pipe 6 via a branch 7, and according to an alternative embodiment a plurality of individual pumps 2 are connected via branches 7 to an intermediate sewer pipe 8 that is connected to said common main sewer pipe 6. In a Pressure Sewage System the diameter of the branch 7 is typically in the range 40-60 millimeters, the diameter of the intermediate sewer pipe 8 is typically in the range 60-80 millimeters, and the diameter of the common main sewer pipe 6 is typically in the range 80-150 millimeters. Other diameters are conceivable and depending on the extent of the pump network 1.

The inventive method is designed to control an individual pump 2 (in this context equivalent to pump station 3) in connection with first activation of the pump 2 following a connection of the pump 2 to a power supply. Activation of the pump 2 implies that an impeller (not shown) of the pump 2 is driven in rotation by a drive unit (not shown) of the pump 2. The drive unit comprises an electrical motor and a drive shaft. Correspondingly, the term deactivated implies that the impeller of the pump 2 is not driven in rotation by the drive unit, i.e. the drive unit is not energized. Connection or re-connection of the pump 2 to a power supply implies that current/power is admitted to reach the pump 2 (internal relay of the pump 2), for instance that a power switch in a control cabinet or at the pump station 3 is closed, that an electrical cable of the pump 2 is plugged into a socket, that the power returns following a power failure in the power supply network, etc.

Said method is designed to control the activation of each individual pump 2 (pump station 3) independently, independently of the total number of pumps comprised in the pump network 1. Especially the method is designed for distributing over time the activation of a plurality of pumps in a pump network 1 by controlling the activation of each individual pump 2 independently. Thus, the inventive method is specially advantageous for distributing/spreading over time the re-activation of a plurality of pumps in a pump network following a power failure by controlling the re-activation of each individual pump 2 independently. It shall be realized that pump station 3 is equivalent with pump 2 in the context of describing the essence/nature of the inventive method.

The inventive method is characterized by the steps of:
- when connecting the individual pump 2 to the power supply, causing the individual pump 2 to remain deactivated,
- determining a value of at least one Operational Parameter (OP) of the individual pump 2,
- determining a Reference Input Value (RIV) based on the determined value of said at least one Operational Parameter (OP),
- utilizing the determined Reference Input Value (RIV) in a Random pause time Function (RF) and obtaining a random Activation pause time (APT) as an output from said Random pause time Function (RF), said output of the Random pause time Function (RF) being within a predetermined range delimited by a minimum pause time and a maximum pause time, and
- permitting activation of the individual pump 2 after said Activation pause time (APT) has elapsed.

Upon connection/re-connection of the pump 2 to the power supply, the individual pump 2 is kept deactivated by means of the control unit 4, i.e. the control unit 4 is stopped by the control unit 4 itself from activating the pump 2.

The control unit 4 determine a value of the at least one Operational Parameter (OP) of the individual pump 2, for instance by means of suitable sensors. According to a first embodiment, the operational parameter is constituted by a supply voltage level of the individual pump 2 during the determination of the value of said at least one operational parameter of the individual pump 2. According to a second embodiment, the operational parameter is constituted by a temperature level of the individual pump 2 during the determination of the value of said at least one operational parameter of the individual pump 2. Said temperature level is preferably constituted by the temperature level of the control unit 4 or the temperature of the pumped liquid or the temperature of the drive unit of the pump 2. According to a third embodiment, the operational parameter is constituted by a pressure level at the pump outlet. Thus, the operational parameter is an analog value of the individual pump 2, or pump station 3, that can be measured by sensors operatively connected to the control unit 4. Preferably a value of a plurality of operational parameters of the individual pump 2 are determined. Said value/values is/are saved in the control unit.

The Reference Input Value (RIV) is preferably based on at least one digit of the determined/measured value of said at least one operational parameter, most preferably at least one decimal digit. According to an alternative embodiment the Reference input value (RIV) is based at least on a determined value of a first Operational parameter (OP) and on a determined value of a second Operational parameter (OP). According to an example embodiment one or more mathematic calculations/computations are performed in the control unit 4 using the determined value of the first operational parameter and the determined value of the second operational parameter, wherein the result or a portion of the result is utilized as Reference Input Value (RIV).

The control unit 4 utilize/input the determined Reference Input Value into the Random pause time Function, and the control unit 4 executes the Random pause time Function in order to obtain an output. The output from the Random pause time Function is utilized by the control unit 4 as a time value (Activation pause time) that preferably start to count down directly after it has been determined/obtained. According to a preferred embodiment, the output of the Random pause time Function has uniform distribution between said minimum pause time and said maximum pause time. It is preferred that the minimum pause time is as short as possible in order to admit some of the pumps 2 to be activated as soon as possible following power return. At the same time it is preferred that the power supply is stable before to many pumps 2 are activated. Said minimum pause time is preferably equal to or less than 10 seconds and equal to or more than 1 second. The maximum pause time may theoretically be as long as 10 or 15 minutes in order to obtain maximum distribution over time of the re-activation of the pumps 2 in the pump network, but in order to decrease the risk of flooded pump stations 3, especially following a long lasting power failure, said maximum pause time is preferably equal to or less than 420 seconds, most preferably equal to or less than 360 seconds. At the same time the maximum pause time is preferably equal to or more than 60 seconds, most preferably equal to or more than 120 seconds.

When the Activation pause time has elapsed, the control unit 4 permits activation of the individual pump 2 again, i.e. the control unit 4 does no longer block itself from activating/starting the pump 2. The separation between possible Activation pause time is preferably 1 second.

According to a preferred embodiment, the method further comprises the step of activating the individual pump 2 when both said Activation pause time (APT) has elapsed and a Pump start sensor has been triggered. According to an alternative preferred embodiment, the method further comprises the step of activating the individual pump 2 when both said Activation pause time (APT) has elapsed and a predetermined Pump start time interval (PSI) has elapsed.

The Pump start sensor is constituted by a suitable analogue or digital liquid level sensor, and the pump start sensor is triggered when the liquid level in the pump station 3 is high. The Pump start time interval is the longest time interval admitted between a deactivation of a pump 2 and the next activation of the pump 2. During normal operation of the individual pump 2 the pump 2 is always started when the Pump start sensor is triggered, but also when the Pump start time interval has elapsed despite the Pump start sensor has not been triggered. If the wastewater stays to long in the pump station 3, harmful gases may generate. The Pump start time interval may for instance be in the range 1-24 hours.

The pump 2 (pump station 3) comprises means adapted to execute the steps of the above method. Many of the steps of the above method are preferably performed/controlled by the control unit 4, and thus the term "the pump 2 comprises means..." does not necessarily imply that said means has to be located within the pump housing of the pump 2. Thus the term also includes means accessible/available/operatively connected to the pump 2 and/or the pump station 3.

A computer program product comprising instructions to cause the individual pump 2 to execute the steps of the above method, is accessible/available/operatively connected to the pump 2. Said computer program product is preferably located in the control unit 4.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A method for controlling a pump (2) in connection with first activation of the individual pump (2) following a connection of the individual pump (2) to a power supply, said pump (2) being configured to be connected to a Pump Network (1) comprising a plurality of pumps,
wherein said method is **characterized by** the steps of:
- when connecting the individual pump (2) to the power supply, causing the individual pump (2) to remain deactivated,
- determining a value of at least one Operational parameter (OP) of the individual pump (2),
- determining a Reference input value (RIV) based on the determined value of said at least one Operational parameter (OP),
- utilizing the determined Reference input value (RIV) in a Random pause time function (RF) and obtaining a random Activation pause time (APT) as an output from said Random pause time function (RF), said output of the Random pause time function (RF) being within a predetermined range delimited by a minimum pause time and a maximum pause time, and
- permitting activation of the individual pump (2) after said Activation pause time (APT) has elapsed.

2. The method according to claim 1, further comprises the step of:
- activating the individual pump (2) when both said Activation pause time (APT) has elapsed and a Pump start sensor has been triggered.

3. The method according to claim 1, further comprises the step of:
- activating the individual pump (2) when both said Activation pause time (APT) has elapsed and a predetermined Pump start time interval (PSI) has elapsed.

4. The method according to any of claims 1-3, wherein the output of the Random pause time function (RF) has uniform distribution between said minimum pause time and said maximum pause time.

5. The method according to any preceding claim, wherein said Reference input value (RIV) is based on at least one digit of the determined value of said at least one Operational parameter (OP).

6. The method according to claim 5, wherein said Reference input value (RIV) is based on at least one decimal digit of the determined value of said at least one Operational parameter (OP).

7. The method according to any of claims 1-6, wherein the value of said at least one Operational parameter (OP) is constituted by a supply voltage level of the individual pump (2) during the determination of the value of said at least one Operational parameter (OP) of the individual pump (2).

8. The method according to any of claims 1-7, wherein the value of said at least one Operational parameter (OP) is constituted by a temperature level of the individual pump (2) during the determination of the value of said at least one Operational parameter (OP) of the individual pump (2).

9. The method according to claim 1, wherein said Reference input value (RIV) is based on a determined value of a first Operational parameter (OP) and on a determined value of a second Operational parameter (OP).

10. A pump (2) configured to be connected to a Pump Network (1) comprising a plurality of pumps, wherein the pump (2) comprises means adapted to execute the steps of the method according to claim 1.

11. The pump according to claim 10, wherein the individual pump (2) is operatively connected to a separate control unit (4).

12. A Pump Network (1) comprising a plurality of pumps, wherein each individual pump (2) is configured according to claim 10.

13. The Pump Network () according to claim 12, wherein each individual pump (2) of said plurality of pumps is operatively connected to a common control unit (5).

14. The Pump Network (1) according to claim 12 or 13, wherein each individual pump (2) of said plurality of pumps is fluidly connected to a common main sewer pipe (6).

15. A computer program product comprising instructions to cause the pump (2) according to claim 10 to execute the steps of the method according to claim 1.
